# EUROPÄISCHE PATENTSCHRIFT

(11) **EP 4 320 657 B1**
(45) Veröffentlichungstag und Bekanntmachung des Hinweises auf die Patenterteilung: **12.02.2025**
(21) Anmeldenummer: 22731517.3
(22) Anmeldetag: 25.05.2022
(51) Int. Cl.: H01M 8/0228, H01M 8/0273, H01M 8/0284, H01M 8/0286, H01M 8/0297, H01M 8/242

(54) **BRENNSTOFFZELLE MIT ELASTOMERSCHICHTEN UND VERFAHREN ZUR HERSTELLUNG EINER BRENNSTOFFZELLE**
FUEL CELL WITH ELASTOMER LAYERS AND METHOD FOR PRODUCING A FUEL CELL
PILE À COMBUSTIBLE À COUCHES D'ÉLASTOMÈRE ET PROCÉDÉ DE FABRICATION DE PILE À COMBUSTIBLE

(30) Priorität: 31.05.2021 DE 102021113960
(43) Veröffentlichungstag der Anmeldung: 14.02.2024
(73) Patentinhaber: AUDI AG, 85057 Ingolstadt (DE)
(72) Erfinder: GÖBEL, Martin, 74081 Heilbronn (DE); KEITSCH, Oliver, 74076 Heilbronn (DE); KÖNNICKE, Daniela, 74861 Neudenau (DE); RIEDE, Nico, 70435 Stuttgart (DE); STRÖBEL, Raimund Theo, 74080 Heilbronn (DE)
(74) Vertreter: Hentrich Patent- & Rechtsanwaltspartnerschaft mbB
(86) Internationale Anmeldenummer: PCT/EP2022/064149
(87) Internationale Veröffentlichungsnummer: WO 2022/253654

(56) Entgegenhaltungen:
- EP-A2- 1 306 915
- DE-A1- 102012 020 975
- DE-A1- 102016 121 614
- DE-A1- 102017 101 276
- DE-A1- 102019 218 681
- DE-A1- 4 309 976
- DE-B4- 112007 000 072
- DE-U1- 202004 017 647

## Beschreibung

Die Erfindung betrifft eine Brennstoffzelle mit einer in eine Aussparung eines Rahmens eingesetzten Membranelektrodenanordnung, an deren erster Seite eine erste Bipolarplatte, und an deren der ersten Seite gegenüberliegenden zweiten Seite eine zweite Bipolarplatte angeordnet ist. Darüber hinaus betrifft die Erfindung ein Verfahren zur Herstellung einer Brennstoffzelle.

Brennstoffzellen, wie sie beispielsweise im Rahmen eines Brennstoffzellensystems zum Betrieb von Kraftfahrzeugen eingesetzt werden, umfassen eine Membranelektrodenanordnung, die aus einer protonenleitenden Membran gebildet ist, auf deren einer Seite die Anode und auf deren anderer Seite die Kathode ausgebildet ist, wobei die Elektroden auf die Membran gegossen oder gesprüht oder mittels eines Kalanderprozesses heiß verpresst werden, um einen innigen Kontakt zu erzielen. Den Elektroden werden Reaktantengase zugeführt, nämlich anodenseitig insbesondere Wasserstoff und kathodenseitig Sauerstoff bzw. ein sauerstoffhaltiges Gas, insbesondere Luft. Bei der elektrochemischen Reaktion, reagiert der Wasserstoff mit dem Sauerstoff der Luft unter Bildung von Wasser.

Um die Membranelektrodenanordnung in ihrem aktiven Bereich mit den Reaktantengasen zu versorgen sind Bipolarplatten vorgesehen. Im Allgemeinen wird zur fluidmechanischen Abdichtung der Brennstoffzelle und insbesondere der Bipolarplatten metallische Sicken im Verbund mit einer Elastomerschicht verwendet. Dies führt dazu, dass die wesentlichen Funktionen einer Dichtung, also die Elastizität und der Rautiefenausgleich, voneinander getrennt und dem dafür geeigneten Material zugeordnet sind. Dabei ist der Rautiefenausgleich vollständig der Elastomerschicht zuzuordnen während der wesentliche elastische Anteil der Abdichtung durch die metallische Sicke übernommen wird.

Um eine gleichmäßige Verpressungskennlinie der Sicke entlang der Dichtungslinie der Bipolarplatte einzustellen, weist die Sicke entlang der Bipolarplattenebene variierende Geometrien auf. Der für die geometrische Variation notwendige Herstellprozess führt dazu, dass das Sickendach nicht eben ist, sondern im Umformprozess deformiert wird. Dies bedeutet auf dem Sickendach entstehen Dellen und Buckel, sodass die Sicke im einstelligen Mikrometerbereich uneben ist. Üblicherweise werden Elastomerschichten mit einer Dicke kleiner als 50µm verwandt, die diese Unebenheit nicht ausreichend ausgleichen und/oder abdichten können.. Um eine ausreichende Dichtung bereitstellen zu können muss die Höhe der Dichtung, die Höhe des Flussfeldes, also der Bipolarplatte und der zwischen der Bipolarplatte und der Membranelektrodenanordnung angeordneten Gasdiffusionslage entsprechen. Eine Dichtung muss folglich eine Höhe von typischerweise 0,2 mm bis 0,7 mm, bevorzugt 0,3 mm bis 0,6 mm haben.

Bei der bisher üblichen Herstellung der Brennstoffzelle, insbesondere des Dichtsystems für die Brennstoffzelle, wird z.B. die metallische Sicke mit Elastomerschicht in einem diskreten Herstellungsprozess produziert. Diesem Prozess wird die vorgefertigte Bipolarplatte zugeführt. Der Auftrag des Elastomers kann zum Beispiel in einem Siebdruckprozess oder auch in einen Spritzgussprozess erfolgen. Für diese Prozesse ist die Materialauswahl aufgrund von Verarbeitung und Haftung sehr eingeschränkt. Zwar lassen sich mit dem chemisch sehr stabilen, aber teuren Fluorkautschuken diese Anforderungen gut erfüllen, doch muss durch Aufschäumen dieser Materialien die nötige Shore-Härte eingestellt werden. Die Folge sind lange Trocknungs- und Vernetzungszeiten. Weiterhin sind Siebdruckprozesse sehr störanfällig, was einen hohen Aufwand für die Qualitätssicherung, insbesondere einer aufwendigen Leckageprüfung nach sich zieht.

Die DE 10 2011 105 072 B3 offenbart ein Verfahren zum Herstellen einer Membranelektrodeneinheit für eine Brennstoffzelle, wobei dünne Dichtelemente auf einen Rahmen der Membranelektrodeneinheit angeordnet werden. Dabei ist das für die Dichteelemente beschriebene Material nicht geeignet, bei den für Brennstoffzellen typischen Verpressungskräften einen Rautiefenausgleich zur Bipolarplatte zu ermöglichen, und so eine ausreichende fluidmechanische Abdichtung zu erzielen.

Die DE 10 2018 217 291 A1 beschreibt ein Verfahren zum Abdichten einer Brennstoffzelle, wobei auch wenigstens eine Dichtstelle der Brennstoffzelle eine Dichtfolie aufgebracht wird.

Die DE 10 2012 221 730 A1 offenbart ein Verfahren zum Abdichten eines Kühlmittelraums einer Bipolarplatte einer Brennstoffzelle. Dabei ist die Membranelektrodeneinheit beidseitig mit Dichtelementen versehen.

Die DE102016121614A1 offenbart eine Brennstoffzelle, umfassend eine Membran-Elektroden-Anordnung und einen Rahmen, der die Membran-Elektroden-Anordnung einseitig überlappend umrahmt, wobei an beiden Seiten der Membran-Elektroden-Anordnung Bipolarplatten angeordnet sind, wobei der Rahmen mit einer Bipolarplatte mittels eines thermoplastischen Klebstoffs umlaufend dichtend verbunden ist.

Die DE 10 2019 202682 A1 offenbart eine Brennstoffzelle, umfassend eine Membran-Elektroden-Anordnung und einem Rahmen, welcher die Membran-Elektroden-Anordnung einseitig überlappend umrahmt, wobei an beiden Seiten der Membran-Elektroden-Anordnung Bipolarplatten angeordnet sind, wobei der Rahmen eine erste rahmenförmige Schicht und eine zweite rahmenförmige Schicht umfasst, die durch eine aus einem Klebstoff gebildete Haftschicht miteinander verbunden sind und in ihrer Gesamtheit den Rahmen bilden.

Daher ist es Aufgabe der vorliegenden Erfindung, eine Brennstoffzelle und ein Verfahren zur Herstellung einer Brennstoffzelle bereitzustellen, die die oben genannten Nachteile reduziert.

Diese Aufgabe wird durch eine Brennstoffzelle mit den Merkmalen des Anspruchs 1 und durch ein Verfahren mit den Merkmalen des Anspruchs 6 gelöst. Vorteilhafte Ausgestaltungen mit zweckmäßigen Weiterbildungen der Erfindung sind in den abhängigen Ansprüchen angegeben.

Dabei zeichnet sich die Brennstoffzelle insbesondere dadurch aus, dass ein Randbereich des Rahmens auf einer der ersten Bipolarplatte zugewandten Seite eine als Folie gebildete erste Elastomerschicht aufweist, dass der Randbereich des Rahmens auf seiner der zweiten Bipolarplatte zugewandten zweiten Seite eine als Folie gebildete zweite Elastomerschicht aufweist, und dass die auf dem Rahmen angeordneten Elastomerschichten eingerichtet sind, die Bipolarplatten mittels Rautiefenausgleichs und der bereitgestellten Elastizität fluidmechanisch abzudichten. Dadurch wird eine einfacher und damit günstiger zu fertigende und gut abdichtende Brennstoffzelle geschaffen. Zudem liegt eine größere Auswahl an für die Elastomerschichten geeigneten Materialien vor.

Das Material für die Elastomerschichten ist dabei bevorzugt gewählt aus einer Gruppe: Acrylatkautschuk (ACM), Acrylnitril-Butadien-Kautschuk (NBA), Ethylen-Propylen-Dien-(Monomer)-Kautschuk (EPDM), Fluorkautschuk (FPM, XFPM), Methyl-Ninyl-Kautschuk (MVQ), Hydrierter Acrylnitrilbutadien-Kautschuk (HNBR), Fluor-Silikon-Kautschuk (FVMQ), Polyester-Urethan-Kautschuk (AU, PUR), Styrol-Butadien-Kautschuk (SBR), Naturkautschuk (NK), Isobuten-Isopren-Kautschuk (IIR), chlorsulfoniertes Polyethylen (CSM), Chloropren-Kautschuk (CR), Perfluorkautschuk (FFPM), Tetrafluorethylen/Propylen-Kautschuke (FEPM), oder Polytetrafluorethylen (PTFE). Weiterhin ist es vorteilhaft, wenn die Elastomerschichten eine Shore-Härte aufweisen, die kleiner als 30° A ist. Um die erforderliche Shore-Härte zu erreichen, ist es bevorzugt, wenn die Elastomerschichten aus aufgeschäumten Elastomermaterial gebildet sind. Weiterhin ist es bevorzugt, wenn die Dicke der Elastomerschichten auf jeder Seite maximal 50 µm und im verpressten Zustand jeweils kleiner als 30 µm betragen.

Insbesondere ist es bevorzugt, wenn der Rahmen, die erste Elastomerschicht und die zweite Elastomerschicht einen Folienverbund bilden. Der Folienverbund ist folglich ein mehrlagiger Folienverbund.

Um Material einzusparen, ist es bevorzugt, wenn die erste Elastomerschicht und/oder die zweite Elastomerschicht den Randbereich des Rahmens nur bereichsweise bedeckt.

In diesem Zusammenhang ist es insbesondere von Vorteil, wenn die erste Elastomerschicht einen ersten Bereich auf der ersten Seite des Randbereichs des Rahmens bedeckt, wenn die zweite Elastomerschicht einen zweiten Bereich auf der zweiten Seite des Randbereichs des Rahmens bedeckt und wenn die bedeckten Bereiche bezüglich einer Längsachse asymmetrisch ausgebildet sind.

Weiterhin ist es bevorzugt, um die erforderliche Abdichtung einzustellen, wenn die erste Elastomerschicht sich von der zweiten Elastomerschicht in der Dicke und/oder im Material unterscheidet.

Weiterhin ist es vorteilhaft, wenn die Brennstoffzelle einen zweiten Rahmen mit einer zweiten Aussparung aufweist, wenn der erste Rahmen und der zweite Rahmen gestapelt angeordnet sind, und wenn eine der Elastomerschichten als eine Folie zwischen dem ersten Rahmen und dem zweiten Rahmen, auf deren Randbereich angeordnet ist. Insbesondere kann in der zweiten Aussparung des zweiten Rahmens eine der Gasdiffusionslagen angeordnet sein. Die zweite Aussparung des zweiten Rahmens weist bevorzugt eine größere Fläche auf, als die Aussparung des ersten Rahmens. Die Rahmen sind dabei vorzugsweise aus unterschiedlichem Material gebildet, um den Rahmen unterschiedliche Funktionen innerhalb des Brennstoffzellenaufbaus zuzuordnen. Darüber hinaus ist es bevorzugt, wenn der zweite Rahmen radial nach außen bezüglich dem ersten Rahmen versetzt angeordnet ist. Ebenso ist zur Verbesserung der Dichtung bevorzugt, wenn eine als Folie gebildete dritte Elastomerschicht zwischen dem zweiten Rahmen und der zum zweiten Rahmen benachbarten Bipolarplatte angeordnet ist.

Das Verfahren zeichnet sich insbesondere durch die folgenden Schritte aus:
- Bereitstellen eines als eine erste Folie gebildeten Rahmenmaterials, einer als eine zweite Folie gebildeten ersten Elastomerschicht und einer als eine dritte Folie gebildeten zweiten Elastomerschicht,
- Übereinanderlegen und Verbinden der Schichten zu einer Rahmen-Dichtungsfunktionsschicht derart, dass an einer ersten Seite des Rahmenmaterials die erste Elastomerschicht und an einer der ersten Seite gegenüberliegenden zweiten Seite des Rahmenmaterials die zweite Elastomerschicht angeordnet ist,
- Zuschneiden der Rahmen-Dichtungsfunktionsschicht zu einzelnen Rahmenelementen und Heraustrennen einer Aussparung aus den Rahmenelementen,
- Positionieren der Membranelektrodenanordnung in die Aussparung des Rahmenelements,
- Bereitstellen von zwei Bipolarplatten und Positionieren der ersten Bipolarplatte auf die erste Seite der Membranelektrodenanordnung und Positionieren der zweiten Bipolarplatte auf die der ersten Seite gegenüberliegenden zweiten Seite der Membranelektrodenanordnung, und
- formschlüssiges Verbinden der Membranelektrodenanordnung mit dem Rahmenelement und den Bipolarplatten.

Dies ermöglicht eine kostenreduzierte Herstellung der Brennstoffzelle indem eine größere Materialauswahl durch veränderte Prozesse und Haftungsvoraussetzungen der Materialien zur Verfügung stehen. Aufgrund des robusten Prozesses ist auch eine reduzierte Qualitätskontrolle möglich, sodass auf eine vereinfachte Leckageprüfung ausreichend ist. Die Verbindung kann dabei mittels eines Bindemittels als eine stoffschlüssige Verbindung erfolgen. Bevorzugt ist allerdings, dass eine lösbare Verbindung zwischen dem Rahmenelement, der Membranelektrodenanordnung und den Bipolarplatten erzielt wird. Dies kann beispielsweise durch Verpressen, d.h. durch Ausüben eines Drucks senkrecht zur Bipolarplatte erzielt werden.

Die erweiterte Materialauswahl umfasst dabei Materialien wie Acrylatkautschuk (ACM), Acrylnitril-Butadien-Kautschuk (NBA), Ethylen-Propylen-Dien-(Monomer)-Kautschuk (EPDM), Fluorkautschuk (FPM, XFPM), Methyl-Ninyl-Kautschuk (MVQ), Hydrierter Acrylnitrilbutadien-Kautschuk (HNBR), Fluor-Silikon-Kautschuk (FVMQ), Polyester-Urethan-Kautschuk (AU, PUR), Styrol-Butadien-Kautschuk (SBR), Naturkautschuk (NK), Isobuten-Isopren-Kautschuk (IIR), chlorsulfoniertes Polyethylen (CSM), Chloropren-Kautschuk (CR), Perfluorkautschuk (FFPM), Tetrafluorethylen/Propylen-Kautschuke (FEPM), oder Polytetrafluorethylen (PTFE). Um die Shore-Härte bevorzugt auf weniger als 30° A einzustellen ist es bevorzugt, wenn das Verfahren zusätzlich eine Aufschäumung des Elastomermaterials vorsieht.

Insbesondere ist es zur Verteilung der Reaktantengase auf dem aktiven Bereich der Membranelektrodenanordnung bevorzugt, wenn zusätzlich zwei Gasdiffusionslagen bereitgestellt und zwischen der Rahmen-Dichtungsfunktionsschicht und der Bipolarplatten, beidseitig angeordnet werden und formschlüssig und stoffschlüssig mit diesen verbunden werden.

Insbesondere ist es vorgesehen, dass der Schritt des Verbindens der Schichten zu einer Rahmen-Dichtungsfunktionsschicht mittels Transferieren, Sprühen, Gießen, Kalandrieren oder Transferieren erfolgt, um die Rahmendichtungsfunktionsschicht zu generieren.

Weiterhin ist es von Vorteil, wenn die erste Elastomerschicht und/oder die zweite Elastomerschicht mittels Folientransfers nur bereichsweise auf dem Rahmenmaterial haftet, derart, dass die Rahmen-Dichtungsfunktionsschicht nur bereichsweise die erste Elastomerschicht und/oder die zweite Elastomerschicht aufweist.

Insbesondere ist es in diesem Zusammenhang bevorzugt, wenn der Bereich der ersten Elastomerschicht und der Bereich der zweiten Elastomerschicht asymmetrisch bezüglich einer Längsachse der Membranelektrodenanordnung aufgetragen wird. In diesem Zusammenhang ist es bevorzugt, wenn die erste Elastomerschicht und die zweite Elastomerschicht unterschiedliche Dicke und/oder eine unterschiedliche materielle Zusammensetzung und/oder unterschiedliches Material aufweisen.

Um das Verfahren noch weiter zu vereinfachen, ist es bevorzugt, wenn das Rahmenmaterial, die erste Elastomerschicht und die zweite Elastomerschicht jeweils auf einer Rolle gewickelt bereitgestellt werden. Aufgrund der Rollenfertigung ist ein reduzierter Investitionsbedarf für die Fertigung der Brennstoffzelle nötigt. Weiterhin ist der Vorteil eines Rollenprozesses, dass die Auftragung der Schichten schneller als bei einem Siebdruck erfolgt. Die Anpassung der Adhäsion der Elastomerschichten am Rahmenmaterial ist einfacher und die Trocken- und Vernetzungsprozesse können einfacher gestaltet werden.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine schematische Darstellung einer Brennstoffzelle mit zwei Elastomerschichten,
- Fig. 2: eine schematische Darstellung der gerahmten Membranelektrodenanordnung mit Rahmen-Dichtungsfunktionsschicht,
- Fig. 3: eine weitere schematische Darstellung einer gerahmten Membranelektrodenanordnung mit Rahmen-Dichtungsfunktionsschicht,
- Fig. 4: eine weitere schematische Darstellung einer gerahmten Membranelektrodenanordnung mit Rahmendichtungsfunktionsschicht, und
- Fig. 5: eine schematische Darstellung der einer weiteren Brennstoffzelle mit drei Elastomerschichten und zwei Rahmen.

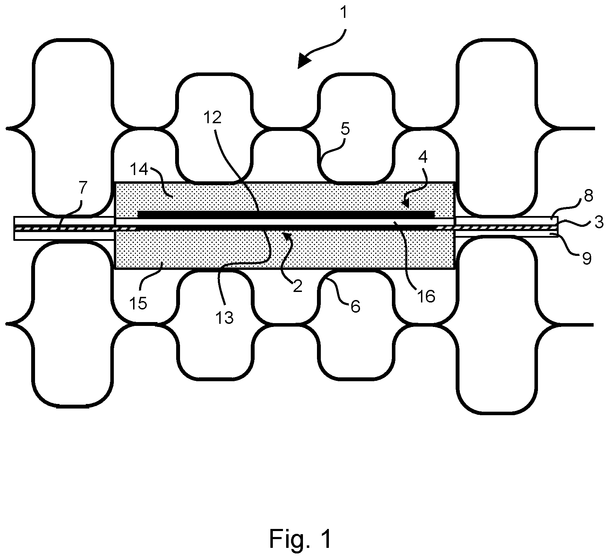

Figur 1 zeigt eine Brennstoffzelle mit einer in einer Aussparung 2 eines Rahmens 3 eingesetzten Membranelektrodenanordnung 4. An einer ersten Seite der Membranelektrodenanordnung 4 ist eine erste Bipolarplatte 5 und an einer der ersten Seite gegenüberliegenden zweiten Seite ist eine zweite Bipolarplatte 6 angeordnet. Die Membranelektrodenanordnung 4 umfasst eine protonleitende Membran 16, an deren erster Seite eine Anode 12 und an deren der ersten Seite gegenüberliegenden zweiten Seite eine Kathode 13 angeordnet ist. Die Anode 12 und die Kathode 13 können eine Katalysatorschicht aus einem Edelmetall oder Gemischen umfassende Edelmetallen wie Platin, Palladium, Ruthenium oder dergleichen aufweisen, die als Reaktionsbeschleuniger bei der Reaktion der Brennstoffzelle dienen.

In einer derartigen Polymerelektrolytmembranbrennstoffzelle (PEM-Brennstoffzelle) werden an der Anode 12 Brennstoff oder Brennstoffmoleküle, insbesondere Wasserstoff, in Protonen und Elektronen aufgespaltet. Die Membran 16 lässt die Protonen (zum Beispiel H⁺) hindurch, ist aber undurchlässig für die Elektronen (e⁻). Die Membran 16 ist aus einem lonomer, vorzugsweise einem sulfonierten Tetrafluorethylen-Polymer (PTFE) oder einem Polymer der perfluorierten Sulfonsäure (PFSA) gebildet. Die Membran 16 kann alternativ auch als eine sulfonierte Hydrocarbon-Membran gebildet sein. An der Anode 12 erfolgt dabei die folgende Reaktion: 2H₂ → 4H⁺ + 4e⁻ (Oxidation/Elektronenabgabe).

Während die Protonen durch die Membran 16 zur Kathode 13 hindurchtreten, werden die Elektronen über einen externen Stromkreis an die Kathode 13 oder an einen Energiespeicher geleitet. An der Kathode 13 ist ein Kathodengas, insbesondere Sauerstoff oder Sauerstoff enthaltende Luft, bereitgestellt, so dass hier die folgende Reaktion stattfindet: O₂ + 4H⁺ + 4e⁻→ 2H₂O (Reduktion/Elektronenaufnahme).

Den beiden Elektroden, nämlich der Anode 12 und der Kathode 13 ist jeweils eine Gasdiffusionslage 14,15 zugeordnet. Die Gasdiffusionslagen 14,15 sind bevorzugt aus Kohlenstoff-Faser-Papier (CFP = "Carbon Fiber Paper") gebildet. Weitere geeignete Faser- und/oder Vlies-Lagen können ebenfalls als Gasdiffusionslage und Basis für eine Gasdiffusionselektrode dienen.

Zur Verbesserung einer Fluid- oder Gasströmung innerhalb des Brennstoffzelle 1 und zur Erhöhung eines Wassergehalts in der Membran 16 können die Gasdiffusionslagen 14, 15 zusätzlich mit einer nicht näher dargestellten mikroporösen Lage versehen sein. Die lateralen Abmessungen der mikroporösen Lage entsprechen dabei im Wesentlichen den lateralen Abmessungen der jeweiligen Gasdiffusionslage 14,15.

Ein Randbereich 7 des Rahmens 3 weist auf seiner der ersten Bipolarplatte 5 zugewandten Seite eine als Folie gebildete erste Elastomerschicht 8 auf, während der Randbereich 7 des Rahmens 3 auf seiner der zweiten Bipolarplatte 6 zugewandten zweiten Seite eine als Folie gebildete zweite Elastomerschicht 9 aufweist. Die auf dem Rahmen 3 angeordneten Elastomerschichten 8, 9 sind dabei eingerichtet, die Bipolarplatten 5, 6 mittels Rautiefenausgleichs und der bereitgestellten Elastizität fluidmechanisch abzudichten. Dabei bilden der Rahmen 3 die erste Elastomerschicht 8 und die zweite Elastomerschicht 9 einen Folienverbund. Dieser Aufbau ermöglicht eine Abdichtung der Bipolarplatten 5, 6, in dem die Elastomerschichten 8, 9 sowohl den Rautiefenausgleich als auch die bereitgestellte Elastizität als Funktion übernehmen. Alternativ können die Elastomerschichten 8,9 auch zunächst als flüssige Masse, beispielsweise als ein Lack oder als eine Paste vorliegen und auf den als Folie gebildeten Rahmen 3 aufgedruckt oder aufgegossen werden.

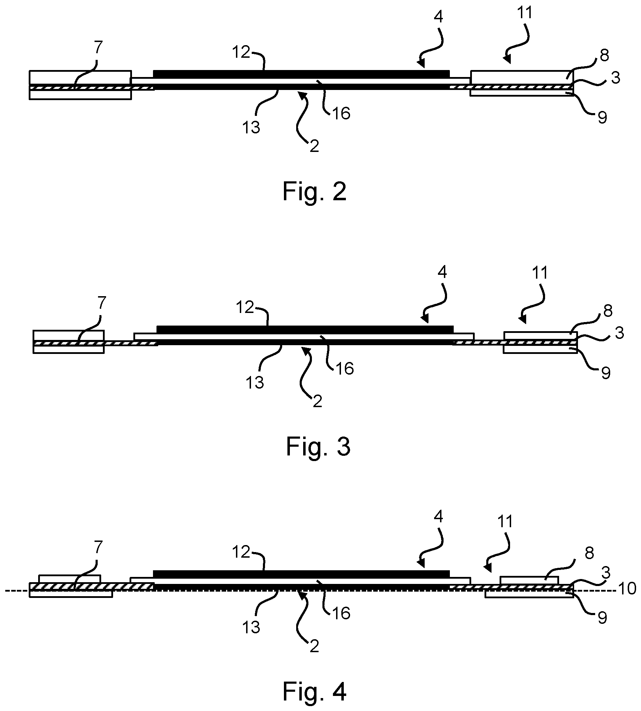

Figur 2 zeigt die gerahmte Membranelektrodenanordnung 4 mit einer Rahmen-Dichtungsfunktionsschicht 11. Die Rahmen-Dichtungsfunktionsschicht 11 ist dabei der Folienverbund aus dem Rahmenmaterial, also dem Rahmen 3, und der ersten Elastomerschicht 8 sowie der zweiten Elastomerschicht 9. In Figur 2, im Unterschied zu den übrigen gerahmten Membranelektrodenanordnungen mit Rahmen-Dichtungsfunktionsschicht 11 ist die erste Elastomerschicht 8 dicker als die zweite Elastomerschicht 9 ausgebildet.

Anhand des Beispiels nach Figur 3 ist zu erkennen, dass die erste Elastomerschicht 8 und/oder die zweite Elastomerschicht 9 den Randbereich 7 des Rahmens 3 nur bereichsweise bedeckt.

In Figur 4 wird ein weiters Beispiel gezeigt, bei der die erste Elastomerschicht 8 einen ersten Bereich auf der ersten Seite des Randbereichs 7 des Rahmens 3 bedeckt, während die zweite Elastomerschicht 9 einen zweiten Bereich auf der zweiten Seite des Randbereichs 7 des Rahmens 3 bedeckt, wobei die bedeckten Bereiche bezüglich einer Längsachse 10 asymmetrisch ausgebildet sind.

Weiterhin kann sich die erste Elastomerschicht 8 von der zweiten Elastomerschicht 9 in ihrem Material und/oder in ihrer materiellen Zusammensetzung unterscheiden.

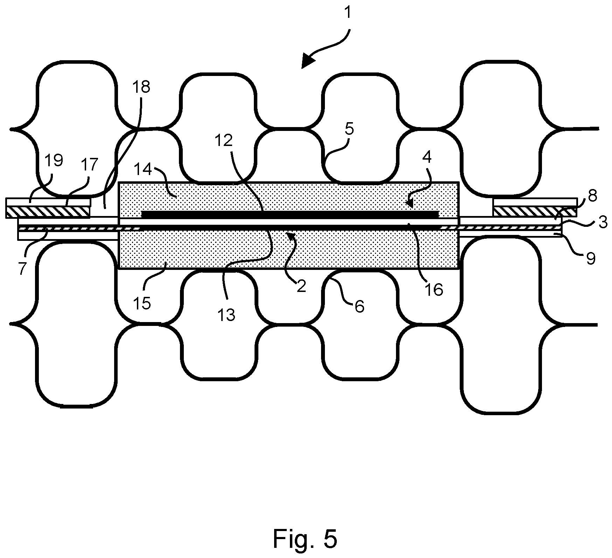

Figur 5 zeigt eine weitere Brennstoffzelle, die im Gegensatz zu der Brennstoffzelle nach Fig. 1 einen zweiten Rahmen 17 mit einer zweiten Aussparung 18 aufweist, in die die erste Gasdiffusionslage 14 aufgenommen ist. Zwischen dem Randbereich des zweiten Rahmens 17 und der ersten Bipolarplatte 5 ist eine als eine Folie gebildete dritte Elastomerschicht 19 angeordnet.

Das Verfahren zur Herstellung einer Brennstoffzelle 1 umfasst die folgenden Schritte: Bereitstellen eines als eine erste Folie gebildeten Rahmenmaterials, einer als eine zweite Folie gebildeten ersten Elastomerschicht 8 und einer als eine dritte Folie gebildeten zweiten Elastomerschicht 9. Die Folien sind jeweils auf einer Rolle aufgerollt, sodass ein Rollenprozess möglich ist.

Die einzelnen Schichten, also die einzelnen Folien, werden übereinander gelegt und zu einer Rahmen-Dichtungsfunktionsschicht 11 derart verbunden, dass an einer ersten Seite des Rahmenmaterials, also des Rahmens 3, die erste Elastomerschicht 8 und an einer der ersten Seite gegenüberliegenden zweiten Seite des Rahmenmaterials die zweite Elastomerschicht 9 angeordnet ist. Das Auftragen und Verbinden der Schichten kann dabei durch Kalandrieren, Sprühen, Gießen, Drucken oder Transferieren erfolgen.

Bei der Brennstoffzelle 1 nach Figur 5, wird zusätzlich noch eine weitere Folie als zweites Rahmenmaterial für den zweiten Rahmen 17 und eine zusätzliche als Folie gebildete dritte Elastomerschicht 19 bereitgestellt. Die einzelnen Schichten, also die einzelnen Folien, werden übereinander gelegt und zu einer Rahmen-Dichtungsfunktionsschicht 11 derart verbunden, dass an einer ersten Seite des Rahmenmaterials, also des Rahmens 3, die erste Elastomerschicht 8, an einer der ersten Seite gegenüberliegenden zweiten Seite des Rahmenmaterials die zweite Elastomerschicht 9, an der der Membranelektrodenanordnung 4 abgewandten Seite der ersten Elastomerschicht 8 das zweite Rahmenmaterial und an der der ersten Elastomerschicht 8 abgewandten Seite des zweiten Rahmenmaterials die dritte Elastomerschicht 19 angeordnet ist. Das Auftragen und Verbinden der Schichten kann dabei durch Kalandrieren, Sprühen, Gießen, Drucken oder Transferieren erfolgen.

Die Rahmen-Dichtungsfunktionsschicht 11 wird zu einzelnen Rahmenelementen zugeschnitten sowie eine Aussparung 2 aus den Rahmenelementen herausgetrennt. Selbstverständlich ist es auch möglich, zunächst die Aussparungen 2 herauszutrennen und danach die Rahmenelemente zuzuschneiden. Die Membranelektrodenanordnung 4 wird in die Aussparung 2 des Rahmenelements positioniert und mindestens zwei Bipolarplatten 5, 6 bereitgestellt. Die erste Bipolarplatte 5 wird auf die erste Seite der Membranelektrodenanordnung 4 positioniert und die zweite Bipolarplatte 6 auf der der ersten Seite gegenüberliegenden zweiten Seite der Membranelektrodenanordnung 4 positioniert. Zwischen der Membranelektrodenanordnung 4 und den Bipolarplatten 5, 6 wird jeweils eine Gasdiffusionslage 14, 15 angeordnet. Schließlich werden ein die Membranelektrodenanordnung 4 mit den Rahmenelement und den Bipolarplatten 5, 6 sowie den Gasdiffusionslagen 14, 15 formschlüssig verbunden. Die Verbindung kann dabei stoffschlüssig d.h. mittels eines Bindemittels erreicht werden. Alternativ und bevorzugt wird die Verbindung durch mechanischen Druck orthogonal zur Bipolarplatte 5,6 erreicht, so dass eine lösbare Verbindung zwischen den Bipolarplatte 5,6 und den die Elastomerschichten 8,9 umfassenden Rahmenelement erzielt wird. Zudem können zusätzlich das Rahmenelement oder der Verbund aus den Bipolarplatten 5,6 Rahmenelement und Gasdiffusionslagen 14,15 mit Wärme, d.h. mit einer Temperatur höher als die Schmelztemperatur des Elastomers, behandelt werden, so dass die Elastomerschichten 8,9 zerfließen und in die Rautiefe der Bipolarplatten 5,6 eindringen. Dies verbessert die Abdichtung der Brennstoffzelle 1.

Um die Elastomerschichten 8, 9 nur bereichsweise auf das Rahmenmaterial aufzutragen, wird die erste Elastomerschicht 8 und/oder die zweite Elastomerschicht 9 mittels Folientransfers nur bereichsweise auf dem Rahmenmaterial aufgetragen und haftet auf diesem.

### BEZUGSZEICHENLISTE:

- 1: Brennstoffzelle
- 2: Aussparung
- 3: Rahmen
- 4: Membranelektrodenanordnung
- 5: erste Bipolarplatte
- 6: zweite Bipolarplatte
- 7: Randbereich des Rahmens
- 8: erste Elastomerschicht
- 9: zweite Elastomerschicht
- 10: Längsachse
- 11: Rahmen-Dichtungsfunktionsschicht
- 12: Anode
- 13: Kathode
- 14: erste Gasdiffusionslage
- 15: zweite Gasdiffusionslage
- 16: protonenleitfähige Membran
- 17: zweiter Rahmen
- 18: zweite Aussparung
- 19: dritte Elastomerschicht

## Patentansprüche

1. Brennstoffzelle (1) mit einer in einer Aussparung (2) eines Rahmens (3) eingesetzten Membranelektrodenanordnung (4), an deren erster Seite eine erste Bipolarplatte (5) und an deren der ersten Seite gegenüberliegenden zweiten Seite eine zweite Bipolarplatte (6) angeordnet ist, wobei ein Randbereich (7) des Rahmens (3) auf seiner der ersten Bipolarplatte (5) zugewandten Seite eine als zweite Folie gebildete erste Elastomerschicht (8) aufweist, der Randbereich (7) des Rahmens (3) auf seiner der zweiten Bipolarplatte (6) zugewandten zweiten Seite eine als dritte Folie gebildete zweite Elastomerschicht (9) aufweist, **dadurch gekennzeichnet, dass** der Randbereich (3) als eine erste Follie gebildet ist, dass der Rahmen (3), die erste Elastomerschicht (8) und die zweite Elastomerschicht (9) einen Folienverbund bilden, und dass die auf dem Rahmen (3) angeordneten Elastomerschichten (8, 9) eingerichtet sind, die Bipolarplatten (5, 6) mittels Rautiefenausgleichs und der bereitgestellten Elastizität fluidmechanisch abzudichten.

2. Brennstoffzelle (1) nach Anspruch 1, **dadurch gekennzeichnet, dass** die erste Elastomerschicht (8) und/oder die zweite Elastomerschicht (9) den Randbereich (7) des Rahmens nur bereichsweise bedeckt.

3. Brennstoffzelle (1) nach Anspruch 1 oder 2, **dadurch gekennzeichnet, dass** die erste Elastomerschicht (8) einen ersten Bereich auf der ersten Seite des Randbereichs (7) des Rahmens (3) bedeckt, dass die zweite Elastomerschicht (9) einen zweiten Bereich auf der zweiten Seite des Randbereichs (7) des Rahmens (3) bedeckt und dass die bedeckten Bereiche bezüglich einer Längsachse (10) asymmetrisch ausgebildet sind.

4. Brennstoffzelle (1) nach einem der Ansprüche 1 bis 3, **dadurch gekennzeichnet, dass** die erste Elastomerschicht (8) sich von der zweiten Elastomerschicht (9) in der Dicke und/oder in dem verwendeten Material unterscheidet.

5. Verfahren zur Herstellung einer Brennstoffzelle (1) nach einem der Ansprüche 1 bis 4, umfassend die Schritte:
- Bereitstellen eines als eine erste Folie gebildeten Rahmenmaterials, einer als eine zweite Folie gebildeten ersten Elastomerschicht (8) und einer als eine dritte Folie gebildeten zweiten Elastomerschicht (9),
- Übereinanderlegen und Verbinden der Schichten zu einer Rahmen-Dichtungsfunktionsschicht (11) derart, dass an einer ersten Seite des Rahmenmaterials die erste Elastomerschicht (8) und an einer der ersten Seite gegenüberliegenden zweiten Seite des Rahmenmaterials die zweite Elastomerschicht (9) angeordnet ist,
- Zuschneiden der Rahmen-Dichtungsfunktionsschicht (11) zu einzelnen Rahmenelementen und Heraustrennen einer Aussparung (2) aus den Rahmenelementen,
- Positionieren der Membranelektronenanordnung (4) in die Aussparung (2) des Rahmenelements,
- Bereitstellen von zwei Bipolarplatten (5,6) und Positionieren der ersten Bipolarplatte (5) auf die erste Seite der Membranelektrodenanordnung (4) und Positionieren der zweiten Bipolarplatte (6) auf die der ersten Seite gegenüberliegenden zweiten Seite der Membranelektrodenanordnung (4), und
- formschlüssiges Verbinden der Membranelektrodenanordnung (4) mit dem Rahmenelement und den Bipolarplatten (5,6).

6. Verfahren nach Anspruch 5, **dadurch gekennzeichnet, dass** der Schritt des Verbindens der Schichten zu einer Rahmen-Dichtungsfunktionsschicht (11) mittels Drucken, Sprühen, Gießen, Kalandrieren oder Transferieren erfolgt.

7. Verfahren nach Anspruch 6, **dadurch gekennzeichnet, dass** die erste Elastomerschicht (8) und/oder die zweite Elastomerschicht (9) mittels Folientransfer nur bereichsweise auf dem Rahmenmaterial haftet, derart, dass die Rahmen-Dichtungsfunktionsschicht (11) nur bereichsweise die erste Elastomerschicht und/oder die zweite Elastomerschicht aufweist.

8. Verfahren nach einem der Ansprüche 5 bis 7, **dadurch gekennzeichnet, dass** die erste Elastomerschicht (8) und die zweite Elastomerschicht (9) eine unterschiedliche Dicke und/oder ein unterschiedliches Material aufweisen.

9. Verfahren nach einem der Ansprüche 5 bis 8, **dadurch gekennzeichnet, dass** das Rahmenmaterial, die erste Elastomerschicht (8) und die zweite Elastomerschicht (9) jeweils auf einer Rolle gewickelt bereitgestellt werden.

## Claims

1. A fuel cell (1) having a membrane electrode assembly (4) which is inserted in a recess (2) of a frame (3) and on the first side of which a first bipolar plate (5) is arranged and on the second side of which, opposite the first side, a second bipolar plate (6) is arranged, a peripheral area (7) of the frame (3) having, on its side facing the first bipolar plate (5), a first elastomeric layer (8) formed as a second film, the peripheral area (7) of the frame (3) has, on its second side facing the second bipolar plate (6), a second elastomeric layer (9) formed as a third film, **characterized in that** the peripheral area (3) is formed as a first foil, **in that** the frame (3), the first elastomeric layer (8) and the second elastomeric layer (9) form a film composite, and **in that** the elastomeric layers (8, 9) arranged on the frame (3) are configured to seal the bipolar plates (5, 6) fluid-mechanically by means of roughness depth compensation and the provided elasticity.

2. The fuel cell (1) according to claim 1, **characterized in that** the first elastomeric layer (8) and/or the second elastomeric layer (9) only partially covers the peripheral area (7) of the frame.

3. The fuel cell (1) according to claim 1 or 2, **characterized in that** the first elastomeric layer (8) covers a first area on the first side of the peripheral area (7) of the frame (3), **in that** the second elastomeric layer (9) covers a second area on the second side of the peripheral area (7) of the frame (3), and **in that** the covered areas are asymmetrical with respect to a longitudinal axis (10).

4. The fuel cell (1) according to any one of claims 1 to 3, **characterized in that** the first elastomeric layer (8) differs from the second elastomeric layer (9) in thickness and/or in the material used.

5. A method of manufacturing a fuel cell (1) according to any one of claims 1 to 4, comprising the steps of:
- Providing a frame material formed as a first film, a first elastomeric layer (8) formed as a second film and a second elastomeric layer (9) formed as a third film,
- Superimposing and joining the layers to form a frame sealing functional layer (11) in such a way that the first elastomeric layer (8) is arranged on a first side of the frame material and the second elastomeric layer (9) is arranged on a second side of the frame material opposite the first side,
- Cutting the frame sealing functional layer (11) to individual frame elements and cutting out a recess (2) from the frame elements,
- Positioning the membrane electrode assembly (4) in the recess (2) of the frame element,
- Providing two bipolar plates (5, 6) and positioning the first bipolar plate (5) on the first side of the membrane electrode assembly (4) and positioning the second bipolar plate (6) on the second side of the membrane electrode assembly (4) opposite the first side, and
- form-fit connecting of the membrane electrode assembly (4) to the frame element and the bipolar plates (5, 6).

6. The method according to claim 5, **characterized in that** the step of joining the layers to form a frame sealing functional layer (11) is carried out by means of printing, spraying, casting, calendering or transferring.

7. The method according to claim 6, **characterized in that** the first elastomeric layer (8) and/or the second elastomeric layer (9) adheres to the frame material by means of film transfer only in certain areas, such that the frame sealing functional layer (11) comprises the first elastomeric layer and/or the second elastomeric layer only in certain areas.

8. The method according to any one of claims 5 to 7, **characterized in that** the first elastomeric layer (8) and the second elastomeric layer (9) have a different thickness and/or a different material.

9. The method according to any one of claims 5 to 8, **characterized in that** the frame material, the first elastomeric layer (8) and the second elastomeric layer (9) are each provided wound on a roll.

## Revendications

1. Pile à combustible (1) avec un agencement d'électrode de membrane (4) inséré dans un évidement (2) d'un cadre (3), au niveau du premier côté duquel une première plaque bipolaire (5) est agencée et au niveau du second côté duquel, opposé au premier côté, une seconde plaque bipolaire (6) est agencée, dans laquelle une zone de bord (7) du cadre (3) présente sur son côté tourné vers la première plaque bipolaire (5) une première couche en élastomère (8) formée comme deuxième film, la zone de bord (7) du cadre (3) présente sur son second côté tourné vers la seconde plaque bipolaire (6) une seconde couche en élastomère (9) formée comme troisième film, **caractérisée en ce que** la zone de bord (3) est formée comme un premier film, **en ce que** le cadre (3), la première couche en élastomère (8) et la seconde couche en élastomère (9) forment un assemblage de film, et **en ce que** les couches en élastomère (8, 9) agencées sur le cadre (3) sont conçues afin de rendre étanche en termes de mécanique fluidique les plaques bipolaires (5, 6) au moyen de la compensation de profondeur de rugosité et de l'élasticité fournie.

2. Pile à combustible (1) selon la revendication 1, **caractérisé en ce que** la première couche en élastomère (8) et/ou la seconde couche en élastomère (9) recouvre seulement par endroits la zone de bord (7) du cadre.

3. Pile à combustible (1) selon la revendication 1 ou 2, **caractérisé en ce que** la première couche en élastomère (8) recouvre une première zone sur le premier côté de la zone de bord (7) du cadre (3), **en ce que** la seconde couche en élastomère (9) recouvre une seconde zone sur le second côté de la zone de bord (7) du cadre (3) et **en ce que** les zones recouvertes sont formées de manière asymétrique par rapport à un axe longitudinal (10).

4. Pile à combustible (1) selon l'une quelconque des revendications 1 à 3, **caractérisée en ce que** la première couche en élastomère (8) se distingue de la seconde couche en élastomère (9) en termes d'épaisseur et/ou de matériau utilisé.

5. Procédé de fabrication d'une pile à combustible (1) selon l'une quelconque des revendications 1 à 4, comprenant les étapes suivantes :
- la fourniture d'un matériau de cadre formé comme un premier film, d'une première couche en élastomère (8) formée comme un deuxième film et d'une seconde couche en élastomère (9) formé comme un troisième film,
- la superposition et la liaison des couches en une couche fonctionnelle de joint d'étanchéité de cadre (11) de telle manière que la première couche en élastomère (8) soit agencée au niveau d'un premier côté du matériau de cadre et la seconde couche en élastomère (9) soit agencée au niveau d'un second côté opposé au premier côté,
- la découpe de la couche fonctionnelle de joint d'étanchéité de cadre (11) en éléments de cadre individuels et la séparation d'un évidement (2) des éléments de cadre,
- le positionnement de l'agencement d'électrode de membrane (4) dans l'évidement (2) de l'élément de cadre,
- la fourniture de deux plaques bipolaires (5, 6) et le positionnement de la première plaque bipolaire (5) sur le premier côté de l'agencement d'électrode de membrane (4) et le positionnement de la seconde plaque bipolaire (6) sur le second côté opposé au premier côté de l'agencement d'électrode de membrane (4), et
- la liaison par complémentarité de formes de l'agencement d'électrode de membrane (4) avec l'élément de cadre et les plaques bipolaires (5, 6).

6. Procédé selon la revendication 5, **caractérisé en ce que** l'étape de liaison des couches en une couche fonctionnelle de joint d'étanchéité de cadre (11) est effectuée par impression, pulvérisation, coulage, calandrage ou transfert.

7. Procédé selon la revendication 6, **caractérisé en ce que** la première couche en élastomère (8) et/ou la seconde couche en élastomère (9) colle au moyen du transfert de film seulement par endroits sur le matériau de cadre de telle manière que la couche fonctionnelle de joint d'étanchéité de cadre (11) présente seulement par endroits la première couche en élastomère et/ou la seconde couche en élastomère.

8. Procédé selon l'une quelconque des revendications 5 à 7, **caractérisé en ce que** la première couche en élastomère (8) et la seconde couche en élastomère (9) présentent une épaisseur différente et/ou un matériau différent.

9. Procédé selon l'une quelconque des revendications 5 à 8, **caractérisé en ce que** le matériau de cadre, la première couche en élastomère (8) et la seconde couche en élastomère (9) sont fournies enroulées respectivement sur un rouleau.
